# FASCICULE DE BREVET EUROPEEN

(11) **EP 0 857 911 B1**
(45) Date de publication et mention de la délivrance du brevet: **14.05.2003**
(21) Numéro de dépôt: 97400276.8
(22) Date de dépôt: 07.02.1997
(51) Int. Cl.: F17C 1/16, B29C 53/60

(54) **Réservoir composite pour fluide sous pression et son procédé de réalisation**
Druckflüssigkeitsbehälter aus Verbundwerkstoff und sein Herstellungsverfahren
Composite pressure vessel for fluids and its fabrication process

(43) Date de publication de la demande: 12.08.1998
(73) Titulaire: COMPOSITES AQUITAINE, 33160 Salaunes (FR)
(72) Inventeur: Schaeffner, Pierre, 33185 Le Haillan (FR); Cassand, Gilles, 33160 Saint Medard en Jalles (FR)
(74) Mandataire: Bonnetat, Christian

(56) Documents cités:
- DE-A- 2 149 962
- DE-A- 2 538 433
- FR-A- 2 280 856

## Description

La présente invention concerne un réservoir de fluide sous pression, présentant une structure composite et susceptible de résister à des pressions internes élevées, par exemple de quelques dizaines ou centaines de bars.

Par le brevet britannique GB-A-1 023 011 et le brevet allemand DE-A-25 38 433, on connaît déjà un tel réservoir, comportant :
- une enveloppe interne, étanche aux gaz et ayant une forme générale cylindrique avec deux extrémités bombées, l'une au moins desdites extrémités bombées étant pourvue d'un orifice central prolongé vers l'extérieur par un col axial saillant ;
- deux pièces polaires rigides rapportées aux extrémités bombées de ladite enveloppe interne, l'une au moins desdites pièces polaires comportant un goulot solidaire d'une embase en forme de coupelle et étant rapportée à ladite extrémité bombée pourvue dudit col de façon que ladite embase soit appliquée et solidarisée de la partie de cette dernière extrémité bombée entourant ledit col et que ledit col soit solidarisé dudit goulot ; et
- une enveloppe externe de renforcement, réalisée en matière composite fibres-résine et recouvrant au moins partiellement lesdites pièces polaires, et notamment ladite embase solidaire du goulot.

Pour construire un tel réservoir :
- on commence à réaliser ladite enveloppe interne, étanche aux gaz ; puis
- on met en place lesdites pièces polaires sur lesdites extrémités bombées de ladite enveloppe interne ; et ensuite
- on réalise ladite enveloppe externe de renforcement par bobinage de fibres résistantes (verre, carbone, etc ...) enrobées de résine durcissable (polyester par exemple), directement sur ladite enveloppe interne, pourvue desdites pièces polaires et servant à cet effet de mandrin de bobinage.

Pendant un tel bobinage, ladite enveloppe interne est maintenue par lesdites pièces polaires de sorte que, pour obtenir une enveloppe externe bobinée de qualité, il est indispensable que la mise en place desdites pièces polaires sur l'enveloppe interne avant bobinage soit effectuée avec une grande précision.

Par ailleurs, on a constaté que dans les réservoirs de fluide sous pression du type rappelé ci-dessus, la solidarisation entre le col de l'enveloppe interne et le goulot de la pièce polaire correspondante était souvent critique en ce qui concerne l'étanchéité du réservoir aux pressions élevées. L'expérience a montré que, du point de vue de l'étanchéité, une liaison satisfaisante entre le col de l'enveloppe interne et le goulot de la pièce polaire correspondante est celle qui est illustrée par le document DE-A-25 38 433 mentionné ci-dessus et dans laquelle cette dernière pièce polaire comporte une gorge annulaire, coaxiale audit goulot et dans laquelle au moins la plus grande partie de la longueur du col est logée de façon que les parois interne et externe dudit. col soient chacune ancrées à la paroi, respectivement en regard, de ladite gorge.

Dans ce document allemand, le col de l'enveloppe interne et ladite gorge annulaire sont tronconiques, tandis que la pièce polaire est réalisée en deux parties délimitant entre elles ladite gorge annulaire et aptes à se déplacer l'une par rapport à l'autre, de façon que ledit col puisse être pincé par effet de coin entre lesdites deux parties de la pièce polaire. On obtient donc l'ancrage dudit col sur ladite pièce polaire, aussi bien du côté interne que du côté externe dudit col. Toutefois, un tel système d'ancrage du col de l'enveloppe interne sur la pièce polaire correspondante n'est utilisable que pour des enveloppes internes réalisées en une matière rigide résistant à l'écrasement, tel que par exemple l'aluminium, et ne peut être mis en oeuvre pour des enveloppes internes en matière synthétique, par exemple en un chlorure de polyvinyle, telles que décrites par le document GB-A-1 023 011.

Par ailleurs, par le brevet allemand DE-A-21 49 962, on connaît un réservoir de fluide sous pression comportant :
- une enveloppe interne, étanche aux gaz et ayant une forme générale cylindrique avec deux extrémités bombées, l'une au moins desdites extrémités bombées étant pourvue d'un orifice central prolongé vers l'extérieur par un col axial saillant, cylindrique et fileté ;
- deux pièces polaires rigides rapportées aux extrémités bombées de ladite enveloppe interne, l'une au moins desdites pièces polaires comportant un goulot et une gorge annulaire, cylindrique, filetée et coaxiale audit goulot, dans laquelle est vissé ledit col ; et
- une enveloppe externe de renforcement, réalisée en matière composite fibres-résine et recouvrant ladite enveloppe interne.

L'objet de la présenté invention est de perfectionner ce dernier réservoir pour en améliorer l'étanchéité et la résistance mécanique et, plus généralement, l'invention concerne un système d'ancrage du col de l'enveloppe interne sur la pièce polaire associée qui :
- puisse être utilisé aussi bien pour des enveloppes internes rigides que pour des enveloppes en matière synthétique ;
- permette une mise en place précise de ladite pièce polaire associée au col de l'enveloppe interne, avant bobinage de l'enveloppe externe de renforcement ; et
- assure une excellente étanchéité entre ledit col et ladite pièce polaire associée, même pour des pressions de gaz élevées à l'intérieur dudit réservoir.

A cette fin, selon l'invention, le réservoir de fluide sous pression, du type rappelé ci-dessus est remarquable en ce que :
- ladite pièce polaire comportant le goulot présente une embase en forme de coupelle solidaire dudit goulot et. appliquée contre la partie de ladite extrémité bombée pourvue dudit col ;
- les parties de ladite gorge non occupées par ledit col sont emplies d'une colle solidarisant ledit col à ladite gorge ;
- une couche de ladite colle est disposée entre ladite embase et ladite partie de l'extrémité bombée pourvue dudit col ; et
- ladite enveloppe externe de renforcement recouvre au moins partiellement ladite embase.

Ainsi, quelle que soit la matière constitutive de ladite enveloppe interne, la mise en place de ladite pièce polaire à goulot et embase sur ledit col se fait par vissage à la manière d'un écrou sur une vis et l'ancrage bilatéral de ladite pièce polaire est obtenue par collage.

Les deux parois cylindriques dudit col de l'enveloppe interne peuvent porter chacune un filetage et, dans ce cas, les deux parois cylindriques de ladite gorge portent également chacune un filetage complémentaire, un filetage de ladite gorge coopérant avec un filetage dudit col.

Dans une forme de réalisation, ladite pièce polaire à goulot et embase est monopièce et ladite gorge, coaxiale audit goulot, est ouverte du côté de ladite embase et borgne du côté opposé à celle-ci. En variante, ladite pièce polaire à goulot et embase comporte deux éléments coaxiaux, rapportés chacun par vissage sur ledit col et ladite gorge est formée par l'espace annulaire séparant lesdits deux éléments rapportés sur ledit col.

Pour la réalisation du réservoir de fluide sous pression conforme à la présente invention, on peut mettre en oeuvre le procédé connu selon lequel :
- on commence par réaliser une enveloppe interne, étanche aux gaz et ayant une forme générale cylindrique avec deux extrémités bombées, l'une au moins desdites extrémités bombées étant pourvue d'un orifice central prolongé vers l'extérieur par un col axial saillant, cylindrique et fileté ;
- on rapporte une pièce polaire rigide à chacune des deux extrémités bombées de ladite enveloppe interne, l'une au moins desdites pièces polaires comportant un goulot et une gorge annulaire, cylindrique, filetée et coaxiale audit goulot, dans laquelle est vissé ledit col ; et
- on bobine, sur ladite enveloppe interne pourvue desdites pièces polaires, une enveloppe externe de renforcement, réalisée en matière composite fibres-résine.

Un tel procédé est remarquable, selon l'invention, en ce que :
- on forme ladite pièce polaire comportant le goulot avec une embase en forme de coupelle solidaire dudit goulot ;
- on visse ladite pièce polaire à goulot et embase sur ledit col jusqu'à ce que ladite embase s'applique contre la partie de ladite extrémité bombée pourvue dudit col, avec interposition de colle, d'une part, entre ledit col et ladite gorge annulaire et, d'autre part, entre ladite embase et ladite partie de ladite extrémité bombée pourvue dudit col ; et
- on fait recouvrir au moins partiellement ladite embase par le bobinage de l'enveloppe externe de renforcement.

Avantageusement, ladite enveloppe interne est en matière synthétique et est réalisée par roto-moulage, le ou les filetages dudit col étant formés pendant le processus de roto-moulage.

Dans une forme préférentielle de réalisation, ladite enveloppe interne est en polyéthylène, lesdites pièces polaires sont usinées dans un alliage métallique léger, la colle est de type époxyde et, avant fixation desdites pièces polaires sur ladite enveloppe interne, lesdites pièces polaires sont prétraitées par oxydation anodique et enduction par un primaire d'époxy, tandis que ladite enveloppe interne est au moins en partie prétraitée avec un copolymère de polyéthylène et d'acétate de polyvinyle.

Les figures du dessin annexé feront bien comprendre comment l'invention peut être réalisée. Sur ces figures, des références identiques désignent des éléments semblables.

Les figures 1A, 1B et 1C illustrent des étapes de la fabrication d'un réservoir de fluide sous pression conforme à l'invention, ces figures montrant, en coupe axiale schématique, respectivement l'enveloppe interne (figure 1A), l'enveloppe interne pourvue de ses pièces polaires d'extrémité (figure 1B) et ledit réservoir de fluide sous pression terminé (figure 1C).

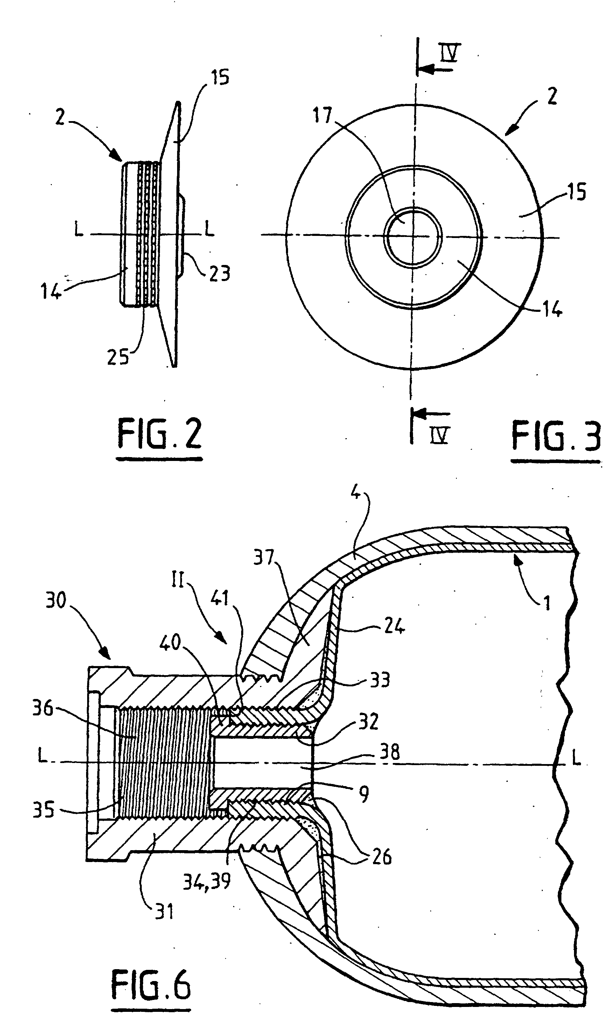

Les figures 2 et 3 montrent, à plus grande échelle, respectivement en vue latérale et en vue de face, un premier mode de réalisation de la pièce polaire à goulot et embase du réservoir de fluide sous pression conforme à la présente invention.

La figure 4 illustré, encore à plus grande échelle et en coupe axiale, la présentation de ce premier mode de réalisation de la pièce polaire à goulot et embase devant le col fileté de l'enveloppe interne, cette pièce polaire étant montrée en coupe selon la ligne IV-IV de la figure 3.

La figure 5 illustre, en vue comparable à la figure 4, la fixation par vissage et collage de ladite pièce polaire à goulot et embase sur le col de l'enveloppe interne.

La figure 6 illustre, en coupe axiale comparable à la figure 5, un second mode de réalisation de la pièce polaire à goulot et embase conforme à l'invention.

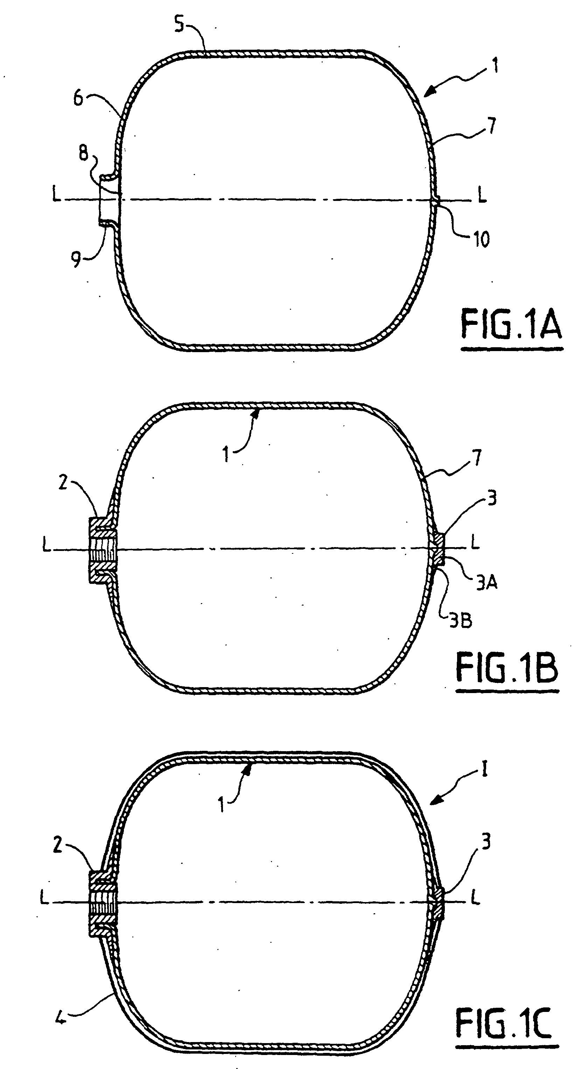

L'exemple de réalisation I du réservoir de fluide sous pression, conforme à la présente invention et montré par la figure 1C, comporte une enveloppe interne 1, deux pièces polaires 2 et 3 et une enveloppe externe 4. Il présente une forme de révolution autour de son axe longitudinal L,L.

L'enveloppe interne 1 (voir la figure 1A) est étanche au gaz et elle présente une partie centrale cylindrique 5 d'axe L,L pourvue de deux extrémités bombées, respectivement 6 et 7, également centrées sur ledit axe L,L.

L'extrémité bombée 6 est pourvue d'un orifice central 8, prolongé vers l'extérieur de ladite enveloppe interne 1 par un col axial périphérique saillant 9.

L'extrémité bombée 7 est pourvue d'un téton central saillant 10.

Bien que l'enveloppe interne 1 puisse être constituée de toute matière, rigide ou déformable, usuellement utilisée pour ses propriétés d'étanchéité aux gaz, (comme l'aluminium ou un chlorure de polyvinyle) et puisse être obtenue par tout procédé approprié (soufflage, extrusion-soufflage, etc ...), dans un exemple avantageux de mise en oeuvre de la présente invention, on réalise ladite enveloppe interne 1 en un polyéthylène par roto-moulage.

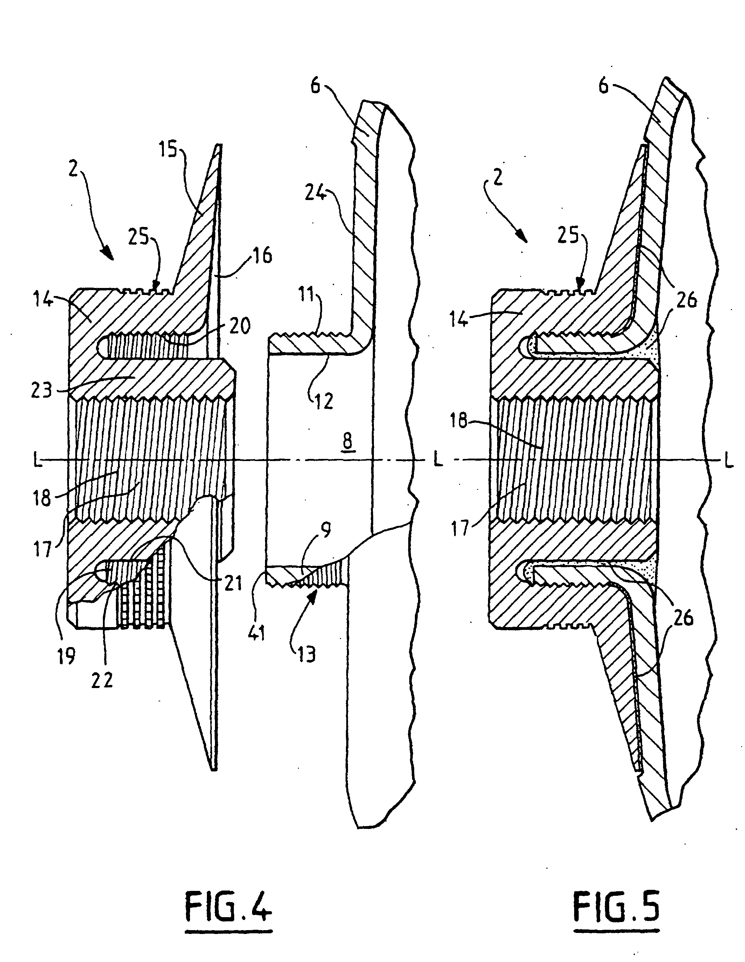

Comme le montrent mieux les figures 4 et 5 à plus grande échelle, le col 9 de l'enveloppe interne 1 est cylindrique et est délimité par une paroi cylindrique externe 11 et une paroi cylindrique interne 12. Dans le mode de réalisation des figures 4 et 5, la paroi cylindrique externe 11 du col 9 est pourvue d'un filetage mâle 13 (non représenté sur les figures 1A, 1B et 1C à cause de la petite échelle de ces figures), de préférence obtenu lors de la réalisation de ladite enveloppe interne 1.

La pièce polaire 2 est monopièce et elle présente une forme de révolution autour de l'axe L,L. Elle comporte une partie centrale épaisse 14, qui forme le goulot et qui s'épanouit à l'une de ses extrémités par une embase 15, au moins approximativement en forme de coupelle, dont la face concave 16 est tournée du côté opposé à ladite partie centrale 14.

La pièce polaire 2 comporte un passage axial traversant 17, faisant office de goulot et avantageusement pourvu d'un filetage 18.

Dans la pièce polaire 2, coaxialement au passage axial 17, est pratiquée une gorge annulaire cylindrique 19, ouverte et débouchante du côté de l'embase 15, mais borgne du côté opposé à ladite embase 15. La gorge 19 est délimitée entre une paroi cylindrique externe 20 et une paroi cylindrique interne 21. La paroi cylindrique externe 20 est pourvue d'un filetage femelle 22, complémentaire du filetage mâle 13 du col 9.

Par ailleurs, les diamètres des parois cylindriques externe 20 et interne 21 sont choisis pour que le noyau cylindrique central 23 délimité entre le passage 17 et ladite gorge annulaire cylindrique 19 puisse pénétrer dans le col 9, à la manière d'un obturateur, et pour que ledit col 9 puisse être introduit dans ladite gorge annulaire cylindrique 19, de façon que les filetages mâle 13 et femelle 22 puissent coopérer et que la pièce polaire 2 puisse être vissée sur le col 9, à la manière d'un écrou sur une vis. De plus, la profondeur axiale de la gorge annulaire cylindrique 19 est telle que, en fin de vissage de la pièce polaire 2 sur le col 9, la face concave 16 de l'embase 15 vienne en pression contre la partie 24 de l'extrémité bombée 6 entourant ledit col 9.

La face latérale externe, par exemple cylindrique, de la partie centrale 14, ainsi qu'éventuellement celle de l'embase 15, est pourvue d'aspérités 25, par exemple réalisées par moletage.

La pièce polaire 2 peut être réalisée par usinage d'un bloc d'un alliage métallique léger.

Comme cela est illustré sur la figure 5, la pièce polaire 2, vissée sur le col 9, peut être ancrée aux deux faces externe 11 et interne 12 par collage, tout comme la face concave 16 sur la partie 24 de l'extrémité 6. Pour cela, avant vissage de la pièce polaire 2 sur le col 9, il suffit d'introduire de la colle dans la gorge 19 et d'enduire la face concave 16 avec une telle colle. Après vissage, la colle (qui porte la référence 26 sur la figure 5) emplit les interstices entre la gorge 19 et le col 9 et ceux entre la face concave 16 et la partie 24 de l'extrémité 6.

De la description ci-dessus, on comprendra aisément que les filetages mâle 13 et femelle 22 pourraient être respectivement remplacés par un filetage femelle (non représenté) pratiqué sur la paroi cylindrique interne 12 du col 9 et par un filetage mâle (non représenté) pratiqué sur la paroi cylindrique interne 21 de la gorge annulaire 19.

Bien entendu, la colle 26 est choisie, en fonction des matières de l'enveloppe interne 1 et de la pièce polaire 2, pour assurer la qualité de collage désirée, après éventuels traitements préalables de ladite enveloppe interne (au moins sur le col 9 et la partie 24) et de ladite pièce polaire 2 (au moins dans la gorge 19 et sur la face concave 16).

Par exemple, si l'enveloppe interne est en polyéthylène et la pièce polaire 2 est en un alliage léger, on peut :
- prétraiter l'enveloppe interne 1 avec un copolymère de polyéthylène et d'acétate de polyvinyle ;
- prétraiter la pièce polaire 2 par oxydation anodique et enduction d'un primaire d'époxy ; et
- utiliser une colle 26 de type époxyde.

On obtient ainsi un encastrement bilatéral du col cylindrique 9 dans la gorge cylindrique 19.

On remarquera qu'il est possible de réaliser le filetage mâle 13 [ou bien le filetage femelle équivalent qui serait prévu sur la paroi cylindrique interne (voir ci-dessus)] pendant le roto-moulage de l'enveloppe interne 1.

Comme le montrent les figures 1B et 1C, dans le mode de réalisation représenté, la pièce polaire 3 est formée par une partie centrale 3A et une collerette périphérique 3B. Elle est centrée au moyen du téton 10. Elle peut être réalisée en alliage métallique léger et être fixée par collage sur l'extrémité bombée 7. Un tel collage peut être semblable à celui décrit ci-dessus à propos de la pièce polaire 2.

Après solidarisation des pièces polaires 2 et 3 sur l'enveloppe interne 1, celle-ci est montée dans une machine de bobinage et utilisée comme mandrin sur lequel sont bobinées, de façon connue, des fibres résistantes (verre, carbone, ...) enrobées d'une résine durcissable. Les pièces polaires 2 et 3 peuvent être utilisées par la machine de bobinage pour maintenir ledit mandrin et/ou le faire tourner.

Le bobinage ainsi obtenu forme, après durcissement, l'enveloppe externe de renforcement 4 qui recouvre l'embase 15 et la collerette périphérique 3B et s'accroche sur les aspérités 25.

Dans l'exemple de réalisation II du réservoir de fluide sous pression, conforme à la présente invention et montré partiellement sur la figure 6, la pièce polaire 30 à goulot et embase n'est pas monopièce comme la pièce polaire 2, mais est constituée de deux éléments indépendants, l'un externe 31 et l'autre interne 32, tandis que le col 9 porte un filetage mâle 33 (comparable au filetage 13) sur sa paroi cylindrique externe (comparable à la paroi cylindrique 11) et un filetage femelle 34 sur sa paroi cylindrique interne (comparable à la paroi cylindrique 12).

L'élément externe 31 de la pièce polaire 30 est tubulaire et est traversé par un passage 35, pourvu d'un filetage femelle interne 36 (comparable au filetage 18) susceptible de coopérer avec le filetage mâle 33 du col 9. A l'une de ses extrémités, l'élément 31 est pourvu d'une embase 37 (comparable à l'embase 15).

L'élément interne 32 de la pièce polaire 30 est également tubulaire et est traversé par un passage 38. Sur sa paroi cylindrique externe, il porte un filetage mâle 39 susceptible de coopérer avec le filetage femelle 34 du col 9. De plus, à l'une de ses extrémités, l'élément 32 comporte un épaulement 40.

Par ailleurs, la longueur axiale de l'élément externe 31 est plus grande que celle de l'élément interne 32.

La mise en place et la solidarisation de la pièce polaire 30 sur le col 9 s'effectuent en deux opérations. On commence par visser l'élément interne 32 dans le col 9 avec interposition de colle 26 et le vissage est poursuivi jusqu'à ce que l'épaulement 40 vienne en butée contre le bord libre 41 du col 9. Ensuite, on visse l'élément externe 31 sur le col 9, après avoir disposé de la colle 26 sur le filetage 33 et sur la partie d'extrémité 24. Le vissage de l'élément externe 31 est poursuivi jusqu'à ce que l'embase 37 soit pressée par sa face concave contre ladite partie 24 de l'extrémité 6.

## Revendications

1. Réservoir de fluide sous pression (I, II) comportant :
- une enveloppe interne (1), étanche aux gaz et ayant une forme générale cylindrique avec deux extrémités bombées (6, 7), l'une au moins (6) desdites extrémités bombées étant pourvue d'un orifice central (8) prolongé vers l'extérieur par un col axial saillant (9), cylindrique et fileté ;
- deux pièces polaires rigides (2, 3 ; 30) rapportées aux extrémités bombées de ladite enveloppe interne, l'une au moins (2, 30) desdites pièces polaires comportant un goulot (14, 31) et une gorge annulaire (19), cylindrique, filetée et coaxiale audit goulot, dans laquelle est vissé ledit col (9) ; et
- une enveloppe externe de renforcement (4), réalisée en matière composite fibres-résine et recouvrant ladite enveloppe interna (1),
**caractérisé en ce que** :
- ladite pièce polaire (2, 30) comportant le goulot (14, 31) présente une embase en forme de coupelle (15, 37) solidaire dudit goulot et appliquée contre la partie (24) de ladite extrémité bombée (6) pourvue dudit col (9) ;
- les parties de ladite gorge (19) non occupées par ledit col (9) sont emplies d'une colle (26) solidarisant ledit col à ladite gorge ;
- une couche de ladite colle est disposée entre ladite embase (15, 37) et ladite partie (24) de l'extrémité bombée (6) pourvue dudit col (9) ; et
- ladite enveloppe externe de renforcement (4) recouvre au moins partiellement ladite embase (15, 37).

2. Réservoir selon la revendication 1,
**caractérisé en ce que** les deux parois cylindriques dudit col (9) portent chacune un filetage (33, 34) et **en ce que** les deux parois cylindriques de ladite gorge portent également chacune un filetage complémentaire (36, 39), un filetage de ladite gorge coopérant avec un filetage dudit col.

3. Réservoir selon l'une des revendications 1 ou 2,
**caractérisé en ce que** ladite pièce polaire (2) à goulot et embase est monopièce et **en ce que** ladite gorge (19), coaxiale audit goulot, est ouverte du côté de ladite embase (15) et borgne du côté opposé à celle-ci.

4. Réservoir selon la revendication 2,
**caractérisé en ce que** ladite pièce polaire (30) à goulot et embase comporte deux éléments coaxiaux (31, 32), rapportés chacun par vissage sur ledit col (9) et **en ce que** ladite gorge est formée par l'espace annulaire séparant lesdits deux éléments (31, 32) rapportés sur ledit col (9).

5. Réservoir selon l'une des revendications 1 à 4,
**caractérisé en ce que** ladite pièce polaire à goulot et embase (2, 30) porte extérieurement des irrégularités de surface (25) pour l'accrochage de ladite enveloppe externe de renforcement (4).

6. Réservoir selon l'une des revendications 1 à 5,
**caractérisé en ce que** ladite enveloppe interne (1) est en une matière thermoplastique, **en ce que** les pièces polaires sont en un alliage métallique léger et **en ce que** ladite colle est de type époxyde.

7. Procédé pour la réalisation d'un réservoir de fluide sous pression, procédé selon lequel :
- on commence par réaliser une enveloppe interne (1), étanche aux gaz et ayant une forme générale cylindrique avec deux extrémités bombées (6, 7), l'une au moins desdites extrémités bombées étant pourvue d'un orifice central (P) prolongé vers l'extérieur par un col axial saillant (9), cylindrique et fileté ;
- on rapporte une pièce polaire rigide (2, 3 ; 30) à chacune des deux extrémités bombées de ladite enveloppe interne, l'une au moins (2, 30) desdites pièces polaires comportant un goulot (14, 31) et une gorge annulaire (19), cylindrique, filetée et coaxiale audit goulot, dans laquelle est vissé ledit col (9) ; et
- on bobine, sur ladite enveloppe interne pourvue desdites pièces polaires, une enveloppe externe de renforcement (4), réalisée en matière composite fibres-résine,
**caractérisé en ce que** :
- on forme ladite pièce polaire (2, 30) comportant le goulot (14, 31) avec une embase en forme de coupelle (15, 37) solidaire dudit goulot ;
- on visse ladite pièce polaire (2, 30) à goulot et embase sur ledit col (9) jusqu'à ce que ladite embase s'applique contre la partie (24) de ladite extrémité bombée (6) pourvue dudit col (9), avec interposition de colle (26), d'une part, entre ledit col (9) et ladite gorge annulaire (19) et, d'autre part, entre ladite embase (15, 37) et ladite partie (24) de ladite extrémité bombée (6) pourvue dudit col (9) ; et
- on fait recouvrir au moins partiellement ladite embase par le bobinage de l'enveloppe externe de renforcement (4).

8. Procédé selon la revendication 7,
**caractérisé en ce que** ladite enveloppe interne (1) est réalisée par roto-moulage, le ou les filetages dudit col (9) étant formés pendant le processus de roto-moulage.

9. Procédé selon l'une des revendications 7 ou 8,
**caractérisé en ce que** ladite enveloppe interne (1) est en polyéthylène, **en ce que** lesdites pièces polaires sont usinées dans un alliage métallique léger, **en ce que** la colle est de type époxyde, et **en ce que**, avant fixation desdites pièces polaires sur ladite enveloppe interne, lesdites pièces polaires sont prétraitées par oxydation anodique et enduites d'un primaire d'époxy, tandis que ladite enveloppe interne est au moins en partie prétraitée avec un copolymère de polyéthylène et d'acétate de polyvinyle.

## Patentansprüche

1. Flüssigkeitsdruckbehälter (I, II), der folgendes umfasst:
- einen Innenmantel (1), der gasdicht ist und eine allgemeine zylindrische Form mit zwei gewölbten Enden (6, 7) besitzt, wobei mindestens eines (6) der genannten gewölbten Enden mit einer mittigen Öffnung (8) versehen ist, die nach außen hin durch einen vorstehenden axialen, zylindrischen und mit Gewinde versehenen Hals (9) verlängert ist;
- zwei starre Polteile (2, 3; 30), die an die gewölbten Enden des genannten Innenmantels angesetzt sind, wobei mindestens eines (2, 30) der genannten Polteile einen Flaschenhals (14, 31) und eine zylindrische, mit Gewinde versehene Ringnut (19) umfasst, die koaxial zum genannten Flaschenhals liegt und in die der genannte Hals (9) eingeschraubt ist; und
- einen Verstärkungsaußenmantel (4), der aus aus Fasern und Harz bestehendem Verbundmaterial hergestellt ist und den genannten Innenmantel (1) bedeckt,
**dadurch gekennzeichnet, dass**:
- das genannte Polteil (2, 30), das den genannten Flaschenhals (14, 31) umfasst, eine Fußplatte in Schalenform (15, 37) aufweist, die fest mit dem genannten Flaschenhals verbunden ist und an dem Teil (24) des genannten gewölbten Endes (6) anliegt, der mit dem genannten Hals (9) versehen ist;
- die Teile der genannten Nut (19), in denen sich der genannte Hals (9) nicht befindet, mit einem Kleber (26) ausgefüllt sind, der den genannten Hals fest mit der genannten Nut verbindet;
- eine Schicht des genannten Klebers zwischen der genannten Fußplatte (15,37) und dem genannten Teil (24) des gewölbten Endes (6) angebracht ist, der mit dem genannten Hals (9) versehen ist; und
- der genannte Verstärkungsaußenmantel (4) zumindest teilweise die genannte Fußplatte (15, 37)bedeckt.

2. Behälter gemäß Anspruch 1,
**dadurch gekennzeichnet, dass** die beiden zylindrischen Wände des genannten Halses (9) jeweils ein Gewinde (33, 34) besitzen und dadurch, dass die beiden zylindrischen Wände der genannten Nut ebenfalls jeweils ein zusätzliches Gewinde (36, 39) besitzen, wobei ein Gewinde der genannten Nut mit einem Gewinde des genannten Halses zusammen wirkt.

3. Behälter gemäß Anspruch 1 oder 2,
**dadurch gekennzeichnet, dass** das genannte Polteil (2) mit Flaschenhals und Pußplatte (2, 30) aus einem Teil besteht und dadurch, dass die genannte Nut (19), die koaxial zum genannten Flaschenhals liegt, auf der Seite der genannten Fußplatte (15) offen und auf deren Gegenseite blind ist.

4. Behälter gemäß Anspruch 2,
**dadurch gekennzeichnet, dass** das genannte Polteil (2) mit Flaschenhals und Fußplatte (2, 30) zwei koaxiale Elemente (31, 32) umfasst, die jeweils durch eine Schraubverbindung an den genannten Hals (9) angesetzt sind, und dadurch, dass die genannte Nut von dem Ringraum gebildet wird, der die beiden an den genannten Hals (9) angesetzten Elemente (31, 32) trennt.

5. Behälter gemäß einem der Ansprüche 1 bis 4,
**dadurch gekennzeichnet, dass** das genannte Polteil mit Flaschenhals und Fußplatte (2, 30) außen Oberflächenunregelmäßigkeiten (25) für die Haftung des genannten Verstärkungsaußenmantels (4) hat.

6. Behälter gemäß einem der Ansprüche 1 bis 5,
**dadurch gekennzeichnet, dass** der genannte Innenmantel (1) aus einem thermoplastischen Material besteht, dass die Polteile aus einer Leichtmetalllegierung sind und dass der genannte Kleber ein Epoxidkleber ist.

7. Verfahren zur Herstellung eines Flüssigkeitsdruckbehälters, nach dem
- man mit der Herstellung eines Innenmantels (1) beginnt, der gasdicht ist und eine allgemeine zylindrische Form mit zwei gewölbten Enden (6,7) besitzt, wobei mindestens eines (6) der genannten gewölbten Enden mit einer mittigen Öffnung (P) versehen ist, die nach außen hin durch einen vorstehenden axialen, zylindrischen und mit Gewinde versehenen Hals (9) verlängert ist;
- man an jedes der beiden gewölbten Enden des genannten Innenmantels ein starres Polteil (2, 2; 30) ansetzt, wobei mindestens eines (2, 30) der genannten Polteile einen Flaschenhals (14, 31) und eine Ringnut (19) umfasst, die zylindrisch und mit Gewinde versehen ist sowie koaxial zur genannten Nut liegt, in die der genannte Hals (9) eingeschraubt ist; und
- man auf den mit den genannten Polteilen versehenen Innenmantel einen Verstärkungsaußenmantel (4) aufwickelt, der aus aus Fasern und Harz bestehendem Verbundmaterial hergestellt ist,
**dadurch gekennzeichnet, dass**
- man das genannte Polteil (2, 30), das den Flaschenhals (14, 31) mit einer Fußplatte in Schalenform (15, 37), die fest mit dem genannten Flaschenhals verbunden ist, umfässt, formt;
- man das genannte Palteil (2, 30) mit Flaschenhals und Fußplatte auf den genannten Hals (9) aufschraubt, bis die genannte Fußplatte an dem Teil (24) des mit dem genannten Hals (9) versehenen gewölbten Endes (6) anliegt, wobei zum einen zwischen den genannten Hals (9) und die genannte Ringnut (19) und zum anderen zwischen die genannte Fußplatte (15, 37) und den genannten Teil (24) des mit dem genannten Hals (9) versehenen gewölbten Endes (6) Kleber (26) gegeben wird; und
- man die Wicklung des Verstärkungsaußenmantels (4) die genannte Fußplatte zumindest teilweise bedecken lässt.

8. Verfahren gemäß Anspruch 7,
**dadurch gekennzeichnet, dass** der genannte Innenmantel (1) durch Rotationsformen hergestellt wird, wobei das Gewinde oder die Gewinde des genannten Halses (9) während des Rotationsformverfahrens geformt werden.

9. Verfahren gemäß Anspruch 7 oder 8,
**dadurch gekennzeichnet, dass** der genannte Innenmantel (1) aus Polyethylen ist, dadurch, dass die genannten Polteile aus einer Leichtmetalliegierung gearbeitet sind, dadurch, dass der Kleber ein Epoxidkleber ist und dadurch, dass die genannten Polteile vor ihrer Befestigung am genannten Innenmantel mitteis anodischer Oxidation vorbehandelt und mit einer Epoxidharzgrundierung gestrichen sind, wohingegen der genannte Innenmantel zumindest teilweise mit einem Polyethylen- und Polyvinylacetat-Copolymer vorbehandelt ist.

## Claims

1. Pressurized fluid storage container (I, II) comprising:
- an inner shell (1) impermeable to gases and having a cylindrical overall shape with two domed end walls (6, 7), at least one (6) of the said domed end walls being provided with a central orifice (8) extended towards the outside by a cylindrical, threaded projecting axial neck (9);
- two rigid pole pieces (2, 3; 30) attached to the domed end walls of the. said inner shell, at least one (2, 30) of the said pole pieces having a throat (14, 31) and a cylindrical, threaded annular groove (19) coaxial with the said throat, into which groove the said neck (9) is screwed; and
- a reinforcing outer shell (4) made of a fibre/resin composite and covering the said inner shell (1),
**characterized in that**:
- the said pole piece (2, 30) having the throat (14, 31) has a cup-shaped base (15, 37) integral with the said throat and applied against that part (24) of the said domed end wall (6) which is provided with the said neck (9);
- those parts of the said groove (19) that are not occupied by the said neck (9) are filled with an adhesive (26) that joins the said neck to the said groove;
- a layer of the said adhesive is placed between the said base (15, 37) and the said part (24) of the domed end wall (6) which is provided with the said neck (9); and
- the said reinforcing outer shell (4) at least partly covers the said base (15, 37).

2. Storage container according to Claim 1,
**characterized in that** the two cylindrical walls of the said neck (9) each have a screw thread (33, 34) and **in that** the two cylindrical walls of the said groove each also have a complementary screw thread (36, 39), a screw thread of the said groove engaging with a screw thread of the said neck.

3. Storage container according to either of Claims 1 and 2,
**characterized in that** the said pole piece (2) with throat and base is a one-piece part and **in that** the said groove (19) coaxial with the said throat is open on the side on which the said base (15) lies and is blind on the side opposite on which the said base lies.

4. Storage container according to Claim 2,
**characterized in that** the said pole piece (30) with throat and base has two coaxial elements (31, 32) each attached by screwing to the said neck (9) and **in that** the said groove is formed by the annular space that separates the said two elements (31, 32) attached to the said neck (9).

5. Storage container according to one of Claims 1 to 4,
**characterized in that** the said pole piece (2, 30) with throat and base has, on the outside, surface irregularities (25) for catching on the said reinforcing outer shell (4).

6. Storage container according to one of Claims 1 to 5,
**characterized in that** the said inner shell (1) is made of a thermoplastic, **in that** the pole pieces are made of a light metal alloy and **in that** the said adhesive is of the epoxy type.

7. Method for producing a pressurized fluid storage container in which:
- an inner shell (1) impermeable to gases and having a cylindrical overall shape with two domed end walls (6, 7) is firstly produced, at least one of the said domed end walls being provided with a central orifice (P) extended towards the outside by a cylindrical, threaded projecting axial neck (9);
- a rigid pole piece (2, 3; 30) is attached to each of the two domed end walls of the said inner shell, at least one (2, 30) of the said pole pieces having a throat (14, 31) and a cylindrical, threaded annular groove (19) coaxial with the said throat, into which groove the said neck (9) is screwed; and
- a reinforcing outer shell (4), made of a fibre/resin composite, is wound over the said inner shell provided with the said pole pieces,
**characterized in that**:
- the said pole piece (2, 30) having the throat (14, 31) with a cup-shaped base (15, 37) integral with the said throat is formed;
- the said pole piece (2, 30) with throat and base is screwed onto the said neck (9) until the said base is applied against that part (24) of the said domed end wall (6) which is provided with the said neck (9), with interposition of adhesive (26), on the one hand, between the said neck (9) and the said annular groove (19) and, on the other hand, between the said base (15, 37) and the said part (24) of the said domed end wall (6) provided with the said neck (9); and
- the said base is at least partly covered by the winding-on of the reinforcing outer shell (4).

8. Method according to Claim 7,
**characterized in that** the said inner shell (1) is produced by rotomoulding, the screw thread or threads on the said neck (9) being formed during the rotomoulding process.

9. Method according to either of Claims 7 and 8,
**characterized in that** the said inner shell (1) is made of polyethylene, **in that** the said pole pieces are machined in a light metal alloy, **in that** the adhesive is of the epoxy type and **in that**, before the said pole pieces are fixed to the said inner shell, the said pole pieces are pretreated by anodic oxidation and coated with an epoxy primer, while the said inner shell is at least partly pretreated with a polyethylene/polyvinyl acetate copolymer.
